# EUROPEAN PATENT APPLICATION

(11) **EP 3 903 962 A1**
(43) Date of publication of application: **03.11.2021**
(21) Application number: 19903712.8
(22) Date of filing: 11.12.2019
(51) Int. Cl.: B21H 3/04, B21K 1/76, B23K 20/12, F16H 19/04, F16H 25/22, F16H 25/24, B62D 3/12

(54) **LINEAR MOTION SHAFT FOR STEERING DEVICE, STEERING DEVICE, AND METHOD OF MANUFACTURING THESE**

(30) Priority: 27.12.2018 JP 2018244751
(71) Applicant: NSK Ltd., Tokyo 141-8560 (JP)
(72) Inventor: UNNO, Kentaro, Maebashi-shi, Gunma 371-0845 (JP)
(74) Representative: Grünecker Patent- und Rechtsanwälte PartG mbB
(86) International application number: PCT/JP2019/048492
(87) International publication number: WO 2020/137552

(57) **Abstract**

The coaxiality of a linear motion shaft in which a first shaft portion and a second shaft portion are connected by friction welding is improved with respect to a portion having a first input section and a portion having a second input section. By rotationally driving at least one of a first gripping tool 57 and a second gripping tool 58 in a state where a gripped section 56 for centering provided in a screw shaft portion 29 which is the first shaft portion is gripped by the first gripping tool 57 for centering, as well as where a rack shaft portion 28 which is the second shaft portion is gripped by the second gripping tool 58 for centering, end portions in the axial direction of the rack shaft portion 28 and the screw shaft portion 29 are abutted while relatively rotating the screw shaft portion 29 and the rack shaft portion 28 to connect the rack shaft portion 28 and the screw shaft portion 29 by friction welding.

## Description

### Technical Field

The present invention relates to a linear motion shaft of a steering device for a vehicle such as an automobile, a steering device including the linear motion shaft, and a manufacturing method thereof.

In a steering device for a vehicle such as an automobile, rotation of a steering wheel is transmitted to an input shaft of a steering gear unit, and the rotation of the input shaft is converted to linear motion in the axial direction of a linear motion shaft (rack shaft) that is arranged in the width direction of a vehicle body. As a result, tie rods which are supported by end portions on both sides in the axial direction of the linear motion shaft are pushed and pulled, so that a steering angle is applied to steered wheels.

Steering devices comprising an electric power steering device including an electric power assist device for reducing a force required for a driver to operate the steering wheel are widely carried out. The electric power steering device is configured to apply an auxiliary power of an electric motor to a member that rotates or linearly moves according to the rotation of the steering wheel. There are three types of electric power steering devices known: a column assist type that applies an auxiliary power to a steering shaft, a pinion assist type that applies an auxiliary power to an input shaft (pinion shaft) of a steering gear unit, and a rack assist type that applies an auxiliary power to the linear motion shaft of the steering gear unit. Among these, the rack assist type electric power steering device has an advantage of easily increasing the auxiliary power.

In the rack assist type electric power steering device, the rotation torque of the electric motor is converted into linear motion in the axial direction of the linear motion shaft by a ball screw mechanism so as to apply the rotation torque to the linear motion shaft. This linear motion shaft is provided with a rack teeth portion in a portion on one side in the axial direction which meshes with a pinion teeth portion of the input shaft which rotates with the rotation of the steering wheel, and comprises a ball screw section in which a spiral female thread groove having a substantially semicircular arc cross-sectional shape is formed in a portion on the other side in the axial direction. When this linear motion shaft is manufactured from one material, it must be discarded as a defective product if the shape accuracy or dimensional accuracy of either the rack teeth portion or the ball screw section is insufficient. Therefore, it is disadvantageous from the aspect of reducing the cost.

JP 2005-247163A describes a manufacturing method of a linear motion shaft in which a rack shaft having rack teeth on the outer peripheral portion and a screw shaft having a thread groove on the outer peripheral portion are joined by friction welding. In the method described in JP 2005-247163A, in a step of manufacturing the rack shaft, the rack teeth are formed by performing a process to the outer peripheral portion of one part in the axial direction of a shaft material that is finished accurately, and the outer peripheral portion of the remaining portion of the shaft material is left unprocessed as a support portion. Further, in a process of manufacturing the screw shaft, the thread groove is formed by performing a process to the outer peripheral portion of one part in the axial direction of the shaft material that is finished accurately, and the outer peripheral portion of the remaining portion of the shaft material is left unprocessed as a support portion. Then, by chucking the support portion of the rack shaft and the support portion of the screw shaft, the rack shaft and the screw shaft are joined by friction welding in a state where the rack shaft and the screw shaft are centered. As a result, the coaxiality between the portion having the rack teeth and the portion having the thread groove of the linear motion shaft is kept within an allowable range.

### Citation List

### [Patent Literature]

Patent Literature 1: JP 2005-247163A

### Summary of Invention

### [Technical Problem]

The method described in JP 2005-247163A has room for improvement in the following aspects.

That is, in the step of manufacturing the screw shaft, when the thread groove is formed by performing a process to one part in the axial direction of the shaft material, there is a possibility that the screw shaft is bent and deformed due to the process so that the coaxiality between a processed portion having the thread groove and the support portion which is an unprocessed portion may decrease. As a result, in a completed linear motion shaft, the coaxiality between the portion having the rack teeth and the portion having the thread groove may be low within the allowable range.

An object of the present invention is to achieve a structure of a linear motion shaft and a manufacturing method thereof that are capable of improving the coaxiality between a first shaft portion having a first input section and a second shaft portion having a second input section or having an outer peripheral surface comprising a cylindrical surface.

### [Solution to Problem]

The linear motion shaft for a steering device to be manufactured according to the present invention includes a first shaft portion having a first input section on the outer peripheral surface to which a driving force for linear motion in the axial direction is input, a second shaft portion, and a joint between the first shaft portion and the second shaft portion.

The method for manufacturing the linear motion shaft of the present invention includes a process of manufacturing the first shaft portion, a process of manufacturing the second shaft portion, and a process to join the first shaft portion and the second shaft portion by friction welding.

Particularly, in the method for manufacturing the linear motion shaft of the present invention, the process of manufacturing the first shaft portion includes a process of forming a first input section in a material for the first shaft portion and a process of forming a gripped section for centering on the outer peripheral surface of an end portion in the axial direction of the first shaft portion on the side to be joined to the second shaft portion with the first input section as a reference after forming the first input section.

Further, the friction welding is performed by gripping the gripped section of the first shaft portion with a first gripping tool for centering, as well as by abutting the end portion in the axial direction of the first shaft portion and an end potion in the axial direction of the second shaft portion in a state where the second shaft portion is gripped by a second gripping tool for centering.

The friction welding can be performed while rotating the first shaft portion and the second shaft portion relative to each other by rotationally driving at least one of the first gripping tool and the second gripping tool.

The friction welding can be performed while rotating the first shaft portion by rotationally driving the first gripping tool and holding the second shaft portion without rotating.

The first input section can be composed of a ball screw section, and in this case, the process of forming the first input section includes a process of forming the ball screw section by a rolling process.

It is preferable that the rolling process is a through-feed rolling process.

In a process of joining the first shaft portion and the second shaft portion by friction welding, it is preferable that a sleeve is fitted around a portion of the first shaft portion that is on the side far from the second shaft portion without any looseness.

The plastic working forming the ball screw section is preferably a rolling process, and more preferably a through-feed rolling process.

In the process of forming the ball screw section, the ball screw section is formed in a predetermined range in the axial direction including the end portion in the axial direction of the first shaft portion on the side to be joined to the second shaft portion, and in the process of forming the gripped section, a shaving process is performed to an end portion in the axial direction of the ball screw section on the side to be joined to the second shaft portion based on a portion of the bass screw section separated in the axial direction from the end portion in the axial direction on the side to be joined to the second shaft portion, so as to form the gripped section.

Alternatively, in the process of forming the gripped section, the gripped section is formed by performing a shaving process only to a radially outside portion of the end portion in the axial direction of the ball screw section on the side to be jointed to the second shaft portion, and in the friction welding which is performed by rotating the first shaft portion by rotationally driving the first gripping tool while holding the second shaft portion without rotating, it is possible to rotate the first shaft portion in a direction of rotation in which the thread peak of the ball screw section appears to move in the direction approaching the second shaft portion when the ball screw section is viewed from the outside in the radial direction.

Alternatively, in the process of forming the ball screw section, the ball screw section can be formed only in a portion separated in the axial direction from the end portion in the axial direction of the first shaft portion on the side to be joined to the second shaft portion, and the process of forming the gripped section can be a process of performing a shaving process to the end portion in the axial direction of the first shaft portion on the side to be joined to the second shaft portion.

The first input section can be composed of a rack teeth portion.

The steering device to be manufactured according to the present invention includes a linear motion shaft comprising a first shaft portion having a first input section on the outer peripheral surface where the driving force for linear motion in the axial direction is input, a second shaft portion, and a joint between the first shaft portion and the second shaft portion. The method for manufacturing the steering device of the present invention includes a process of manufacturing the linear motion shaft.

Particularly, in the method for manufacturing the steering device of the present invention, the linear motion shaft is manufactured by the above method for manufacturing the linear motion shaft of the present invention.

The linear motion shaft for the steering device of the present invention includes a first shaft portion having a first input section on the outer peripheral surface where the driving force for linear motion in the axial direction is input, a second shaft portion, a joint between the first shaft portion and the second shaft portion, and a gripped section for centering coaxial with a portion having the first input section which is provided on the outer peripheral surface of the end portion in the axial direction on the joint side of the first shaft portion.

The first input section can be composed of a ball screw section.

The first shaft portion can have the ball screw section over the entire length in the axial direction of a portion separated in the axial direction from the gripped section.

Alternatively, the first shaft portion has the ball screw section over the entire length in the axial direction, and the gripped section can be formed on the outer peripheral surface of the end portion in the axial direction on the joint side of the ball screw section.

The ball screw section has an incompletely rolled portion at the end portion in the axial direction on the side far from the second shaft portion, and can have a completely rolled portion in a portion adjacent to the side closer to the second shaft portion with respect to the incompletely rolled portion.

The steering device of the present invention includes a linear motion shaft comprising a first shaft portion having a first input section on the outer peripheral surface where the driving force for linear motion in the axial direction is input, a second shaft portion, and a joint between the first shaft portion and the second shaft portion.

Particularly, in the steering device of the present invention, the linear motion shaft is composed of the above linear motion shaft for the steering device of the present invention.

In the structure where the ball screw section has the incompletely rolled portion at the end portion in the axial direction on the side far from the second shaft portion, and the completely rolled portion is provided in the portion adjacent to the side closer to the second shaft portion with respect to the incompletely rolled portion, only the completely rolled portion of the ball screw section can be engaged with a plurality of balls.

### [Advantageous Effect of Invention]

With the present invention, it is possible to improve the coaxiality between the first shaft portion having the first input section and the second shaft portion having the second input section or the outer peripheral surface composed of a cylindrical surface.

### Brief Description of Drawings

Fig. 1 is a schematic view illustrating an electric power steering device of a first example of an embodiment of the present invention.
Fig. 2 is a partial perspective view of a steering gear unit and an electric assist device of the electric power steering device of the first example.
Fig. 3(a) is a plan view of a linear motion shaft of the first example, and Fig. 3(b) is a view of the linear motion shaft in Fig. 3(a) as seen from underneath.
Fig. 4(a) is an end view illustrating a material for a rack shaft portion for forming a rack shaft portion of the linear motion shaft of the first example, and Fig. 4(b) is a side view of the material for the rack shaft portion as seem from the right in Fig. 4(a).
Fig. 5(a) through Fig. 5(d) are cross-sectional views illustrating the operation of forming a rack teeth portion of the rack shaft portion of the first example in the order of processes.
Fig. 6(a) is a plan view of the rack shaft portion of the first example, and Fig. 6(b) is a view of the rack shaft portion in Fig. 6(a) as seen from underneath.
Fig. 7(a) is an end view illustrating a material for a screw shaft portion for forming a screw shaft portion of the linear motion shaft of the first example, and Fig. 7(b) is a side view of the material for the screw shaft portion as seen from the right in Fig. 7(a).
Fig. 8(a) is a plan view of a screw shaft portion intermediate material for forming the screw shaft portion of the first example, Fig. 8(b) is a plan view of the screw shaft portion of the first example, and Fig. 8(c) is an enlarged view of part A in Fig. 8(b).
Fig. 9 is a cross-sectional view of a joint (friction welding portion) between the rack shaft portion and the screw shaft portion of the first example.
Fig. 10(a) is a plan view of a first screw shaft portion intermediate material for forming the screw shaft portion of the linear motion shaft of a third example of an embodiment of the present invention, Fig. 10(b) is a plan view of a second screw shaft portion intermediate material for forming the screw shaft portion of the third example, and Fig. 10(c) is a partial cut plan view illustrating the screw shaft portion of the third example.
Fig. 11(a) is a plan view of a first screw shaft portion intermediate material for forming the screw shaft portion of the linear motion shaft of a fourth example of an embodiment of the present invention, Fig. 11(b) is a plan view of a second screw shaft portion intermediate material for forming the screw shaft portion of the fourth example, and 11(c) is a plan view of the screw shaft portion of the fourth example.
Fig. 12(a) is a plan view of a screw shaft portion of the linear motion shaft of a fifth example of an embodiment of the present invention, and Fig. 12(b) is an enlarged view of the left end portion of the screw shaft portion illustrated in Fig. 12(a).
Fig. 13 is a plan view of a screw shaft portion of the linear motion shaft of a sixth and a seventh example of an embodiment of the present invention
Fig. 14 is a side view of a rack shaft portion of the linear motion shaft of an eighth example of an embodiment of the present invention.
Fig. 15 is a side view of a rack shaft portion of the linear motion shaft of a nineth example of an embodiment of the present invention.

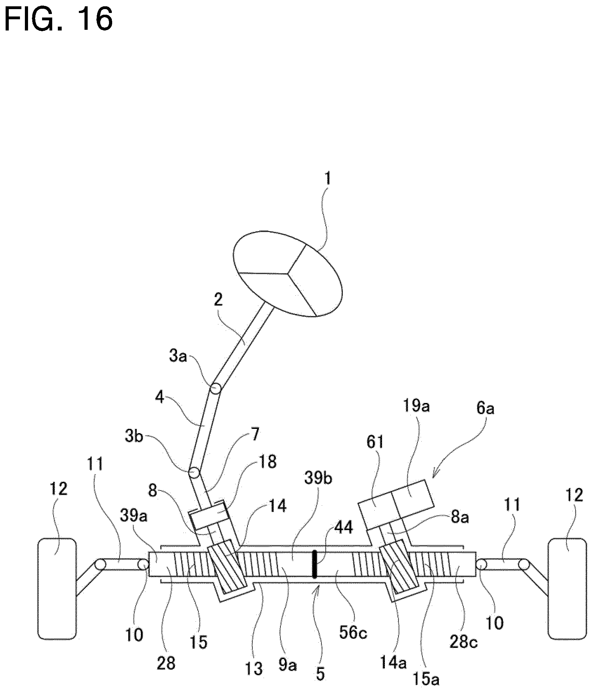

Fig. 16 is a schematic view of a steering device of a tenth example of an embodiment of the present invention.

### Description of Embodiments

### [First Example]

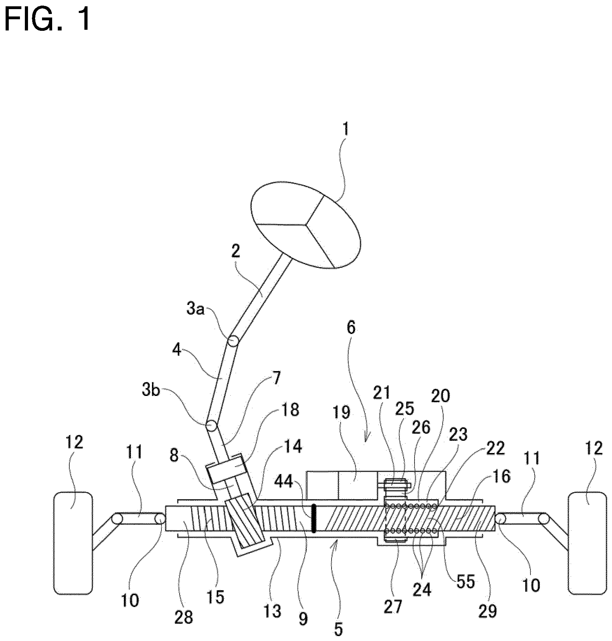

A first example of an embodiment of the present invention will be described with reference to Fig. 1 to Fig. 9.

### (Steering Device and Manufacturing Method Thereof)

The steering device of this example includes an electric power steering device having a function to apply a steering angle to the left and right steered wheels 12 according to the amount of operation of the steering wheel 1 by the driver by pushing and pulling the tie rods, and a function to reduce the force required for the driver to operate the steering wheel 1. The steering device of this example is characterized by the configuration of the linear motion shaft 9. The linear motion shaft 9 of this example comprises a screw shaft portion 29 having a ball screw section 16 on the outer peripheral surface, a rack shaft portion 28 having a rack teeth portion 15 on the outer peripheral surface, and a friction welding portion 44 which is a joint between the rack shaft portion 28 and the screw shaft portion 29. In this example, the ball screw section 16 corresponds to the first input section, the screw shaft portion 29 corresponds to the first shaft portion, and the rack shaft portion 28 corresponds to the second shaft portion.

When the pinion shaft 8 of the steering gear unit 5 rotates as the driver operates the steering wheel, the linear motion shaft 9 makes a linear motion in the axial direction based on the engagement between the pinion teeth portion 14 and the rack teeth portion 15. As a result, the tie rods connected to the end portions on both sides in the axial direction of the linear motion shaft 9 are pulled and pushed via ball joints 10, so that a steering angle is applied to the left and right steered wheels 12 according to the amount of operation of the steering wheel 1.

When the linear motion shaft 9 linearly moves in the axial direction as the driver operates the steering wheel 1, a driving force for the linear motion shaft 9 to make linear motion in the axial direction is applied to the ball screw section 16 from the electric motor 19. Specifically, the rotation of the output shaft 21 of the electric motor 19 is transmitted to the ball nut 23 via a drive pulley 25, an endless belt 26, and a driven pulley 27. The rotation of the ball nut 23 is converted into linear motion in the axial direction of the linear motion shaft 9 by a ball screw mechanism 20 constructed including the ball nut 23 and the ball screw section 16. Due to this, the force required for the driver to operate the steering wheel 1 is reduced.

More specifically, the steering device comprises a steering wheel 1, a steering shaft 2, a pair of universal joints 3a, 3b, an intermediate shaft 4, a rack and pinion steering gear unit 5, and an electric assist device 6.

The steering wheel 1 is supported by and fastened to the rear end section of the steering shaft 2 which is supported by the vehicle body so as to be able to rotate freely. The front end section of the steering shaft 2 is connected to the input shaft 7 of the steering gear unit 5 via the universal joint 3a on the rear side, the intermediate shaft 4, and the universal joint 3b on the front side. The input shaft 7 can be rotated by rotating the steering wheel 1. The rotational motion of the input shaft 7 is converted into linear motion of the linear motion shaft 9 of the steering gear unit 5. As a result, the pair of tie rods 11 connected to the both end portions in the axial direction of the linear motion shaft 9 via the ball joints 10 are pushed and pulled, so that a steering angle according to the amount of operation of the steering wheel 1 is applied to the left and right steered wheels 12. The electric assist device 6 applies a steering auxiliary power to the linear motion shaft 9 in order for the linear motion shaft 9 to make linear motion. As a result, the force required for the driver to operate the steering wheel 1 is reduced.

The rack and pinion steering gear unit 5 of the steering device comprises a housing 13 fastened to the vehicle body, an input shaft 7, a torsion bar (not illustrated), a pinion shaft 8, a linear motion shaft 9, and a pressing mechanism (not illustrated).

The pinion shaft 8 has a pinion teeth portion 14 at the tip-end portion. The pinion shaft 8 is arranged coaxially with the input shaft 7 at the tip-end portion of the input shaft 7, and is connected to the input shaft 7 so as to be able to transmit torque via the torsion bar. The pinion shaft 8 is supported inside the housing 13 by a rolling bearing (not illustrated) so as to be able to only rotate.

The linear motion shaft 9 comprises a rack shaft portion 28 having a rack teeth portion 15 on the outer peripheral surface which is arranged in a portion on one side in the axial direction (left-side portion in Figs 1 to 3(b)), a screw shaft portion 29 having a ball screw section 16 on the outer peripheral surface which is arranged in a portion on the other side in the axial direction (right-side portion in Figs 1 to 3(b)), and a friction welding portion 44 which is a joint between the rack shaft portion 28 and the screw shaft portion 29. That is, the linear motion shaft 9 is formed by connecting the end portion on the other side in the axial direction of the rack shaft portion 28 and the end portion on the one side in the axial direction of the screw shaft portion 29 by friction welding.

The ball screw section 16 is spirally formed in the range from the middle section in the axial direction to the end portion on the other side in the axial direction of the linear motion shaft 9, and comprises a male thread groove 55 having a substantially semi-circular cross-sectional shape.

The rack teeth portion 15 and the ball screw section 16 are both formed by plastic working. Specifically, the rack teeth portion 15 is formed by forging. The ball screw section 16 is formed by rolling process.

In this example, the rack shaft portion 28 and the screw shaft portion 29 are both composed of solid shaft portions. However, when carrying out the present invention, one or both of the rack shaft portion 28 and the screw shaft portion 29 may be composed of a hollow shaft portion.

The linear motion shaft 9 is supported by the housing 13 so as to linearly move in the axial direction by screwing the ball screw section 16 of the ball screw mechanism 20 with a plurality of balls 24 of the ball screw mechanism 20. The rack teeth portion 15 of the linear motion shaft 9 engages the pinion teeth portion 14 of the pinion shaft 8. As a result, the rotational motion of the pinion shaft 8 is converted into linear motion of the linear motion shaft 9. The rotation of the linear motion shaft 9 with respect to the housing 13 is prevented by the engagement between the rack teeth portion 15 and the pinion teeth portion 14.

The steering gear unit 5 of this example has a VGR (Variable Gear Ratio) structure in which the stroke ratio (amount of movement in the axial direction of the linear motion shaft 9 / rotation angle of the pinion shaft 8) which corresponds to the amount of movement in the axial direction of the linear motion shaft 9 per the rotation angle of the pinion shaft 8 varies according to the rotation angle of the pinion shaft8. Specifically, in the steering gear unit 5, the stroke ratio is set to a constant low value near the center portion of the stroke, that is, where the stroke ratio is near the neutral rotation position which corresponds to the rotation position of the steering wheel 1 when the vehicle is traveling straight, and is set to a constant high value near the end portions of both sides of the stroke, that is, where the stroke ratio is near the rotation position of the steering wheel 1 in a state where the steering wheel 1 is steered to the steering limit (in the end pressing state). The stroke ratio varies continuously or stepwise between the vicinity of the center portion of the stroke and the vicinity of the end portions on both sides of the stroke. For this reason, the specifications of the rack teeth portion 15 such as the tooth pitch, the tooth shape, and the inclination angle of the tooth trace are changed according to the position in the axial direction.

In the electric power steering device of this example, since the steering gear unit 5 has the VGR structure, the turning angle of the steered wheels 12 with respect to the amount of operation of the steering wheel 1 is reduced in the vicinity of the center portion of the stroke, and the driving stability while driving straight is improved.

The pressing mechanism is housed inside the housing 13 so as to be on the opposite side in the radial direction of the pinion shaft 8 sandwiching the linear motion shaft 9, and the linear motion shaft 9 is biased toward the pinion shaft 8 based on such as the elasticity of a spring. As a result, the meshing state between the pinion teeth portion 14 and the rack teeth portion 15 is maintained properly, occurrence of noise in the meshing portion between the pinion teeth portion 14 and the rack teeth portion 15 is suppressed, and the operability of the steering wheel 1 is improved.

The steering device of this example comprises an electric assist device 6. The electric assist device 6 is arranged inside the housing 13, and comprises a torque sensor 18, an electric motor 19, a ball screw mechanism 20, and a control section (not illustrated). In the electric assist device 6, an auxiliary power of the electric motor 19 of the power steering device of this example is applied to the linear motion shaft 9, and it is possible to reduce the force required for the driver to operate the steering wheel 1. When the steering wheel 1 is rotated, the direction and magnitude of the torque transmitted to the input shaft 7 from the steering wheel 1 is detected by the torque sensor 18 and transmitted to the control section (not illustrated). The control section controls the amount of energization to the electric motor 19 according to the direction and magnitude of the torque detected by the torque sensor 18, vehicle speed, and the like, and rotationally drives the output shaft 21 of the electric motor 19. The rotation of the output shaft 21 is transmitted to the ball nut 23 of the electric power steering device of this example via the drive pulley 25, the endless belt 26, and the driven pulley 27. The rotational motion of the ball nut 23 is converted into linear motion in the axial direction of the linear motion shaft 9 by the ball screw mechanism 20.

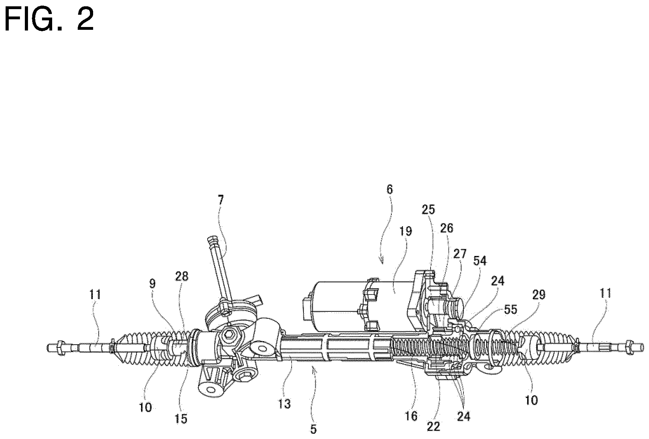

The ball screw mechanism 20 is composed of a spiral female thread groove 22 provided on the inner circumferential surface of the ball nut 23, a male thread groove 55 of the ball screw section 16, and a plurality of balls 24 arranged between the female thread groove 22 and the male thread groove 55 so as to be able to roll freely. The ball nut 23 is screwed into the ball screw section 16 via the plurality of balls 24. The ball nut 23 is supported by the rolling bearing 54 (see Fig. 2) or the like with respect to the housing 13 so as to be able to only rotate.

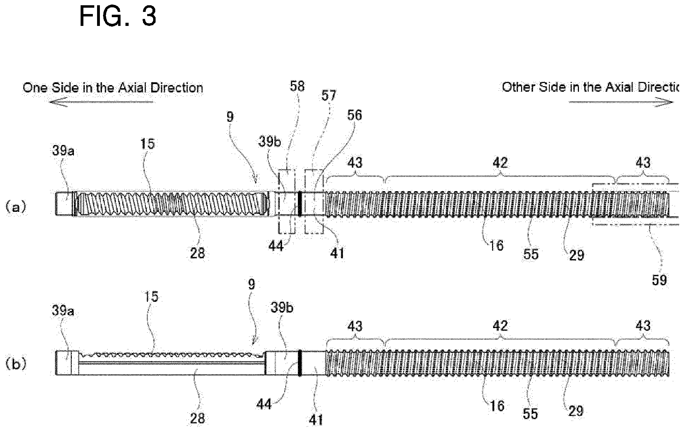

In the linear motion shaft 9 of this example, as illustrated in Figs 3(a) and 3(b), the ball screw section 16 has a completely rolled portion 42 in the middle section in the axial direction, and has an incompletely rolled portion 43 at the end portions on both sides in the axial direction. The completely rolled portion 42 is a portion having a predetermined thread peak height with stable lead groove shape accuracy and so on. The incompletely rolled portion 43 is a portion where the lead groove shape accuracy and the like are not stable and the thread peak height is insufficient as compared with the completely rolled portion 42. In this example, only the completely rolled portion 42 of the ball screw section 16 is used as an engaging portion with the plurality of balls 24. That is, in this example, the plurality of balls 24 engage only with the completely rolled portion 42, and the operating range in the axial direction of the ball screw mechanism 20 is restricted so that the plurality of balls 24 do not engage with the incompletely rolled portion 43.

The electric assist device 6 rotationally drives the output shaft 21 of the electric motor 19 while controlling the amount of energization to the electric motor 19 according to the direction and magnitude of the torque detected by the torque sensor 18 and the vehicle speed signal by the control section. The rotational motion of the output shaft 21 is transmitted to the ball nut 23 via the drive pulley 25, the endless belt 26, and the driven pulley 27, and the rotational motion of the ball nut 23 is converted into linear motion in the axial direction of the linear motion shaft 9 via the plurality of balls 24. Due to this, the linear motion shaft 9 is linearly moved with a force larger than the operating force of the steering wheel 1 by the driver. As a result, the force required for the driver to operate the steering wheel 1 is reduced.

The manufacturing method of the steering device of this example includes a process of manufacturing the linear motion shaft 9, which is a member of the steering device of this example. Particularly, the manufacturing method of the steering device of this example is characterized by the manufacturing method of the linear motion shaft 9.

### (Linear Motion Shaft and Manufacturing Method Thereof)

Next, the manufacturing method of the linear motion shaft 9 in case of manufacturing the electric power steering device of this example will be described with reference to Fig. 3(a) to Fig. 8(c).

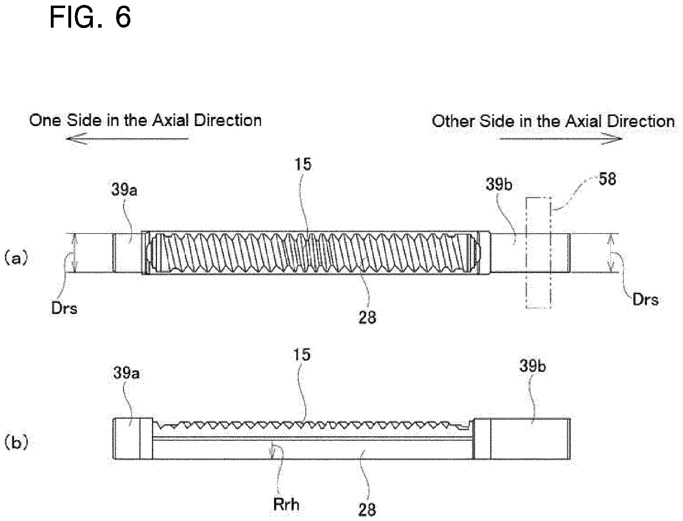

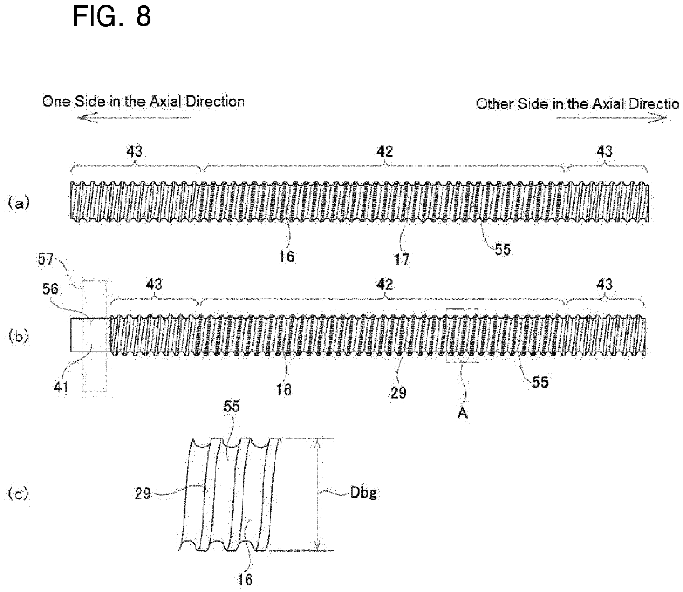

The manufacturing method of the linear motion shaft 9 of this example includes a process to manufacture the rack shaft portion 28 illustrated in Fig. 6(a) and Fig. 6(b), a process to manufacture the screw shaft portion 29 illustrated in Fig. 8(b) and Fig. 8(c), and a process to join the rack shaft portion 28 and the screw shaft portion 29 by friction welding.

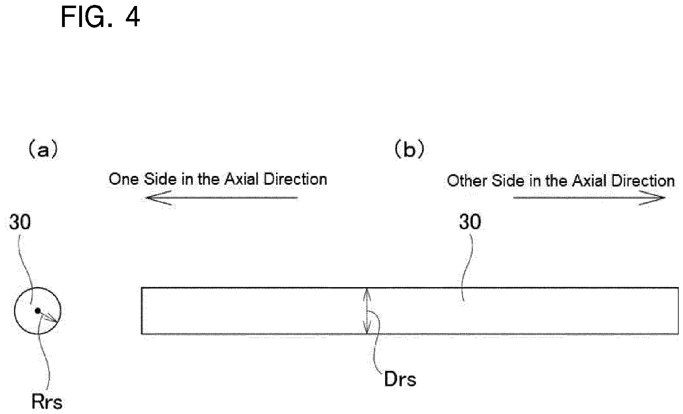

In the process of manufacturing the rack shaft portion 28, a material 30 for the rack shaft portion as illustrated in Fig. 4(a) and Fig. 4(b) is prepared. In this example, the material 30 for the rack shaft portion is made of metal and is a solid round bar having a cylindrical shape. As the metal material for the material 30 for the rack shaft portion, for example, various steels such as carbon steel for machine structure such as S48C and S53C and alloy steel can be employed. The rack shaft portion 28 is manufactured by forming the rack teeth portion 15 by cold forging, which is a plastic working, in a part in the circumferential direction of the outer peripheral surface of the middle section in the axial direction of the material 30 for the rack shaft portion.

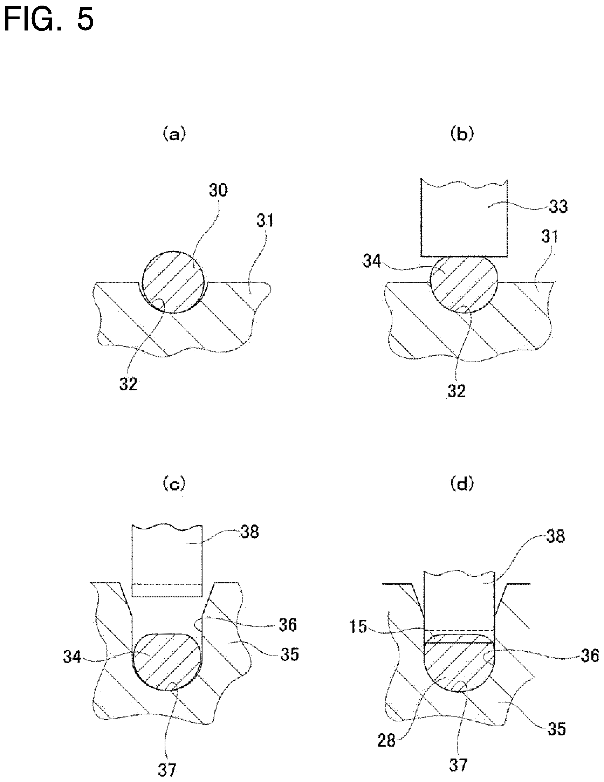

Specifically, as illustrated in Fig. 5(a), the material 30 for the rack shaft portion is set in the concave groove portion 32 having an arc-shaped cross section formed on the upper surface of the receiving mold 31. Then, as illustrated in Fig. 5(b), an upsetting process in which the material 30 for the rack shaft portion is strongly pressed in a direction of pressing against the bottom surface of the concave groove portion 32 is performed by the tip-end surface of the pressing punch 33 extending along the forming direction (front and back direction in Fig. 5(b)) of the concave groove portion 32. In this upsetting process, a portion in the middle section in the axial direction of the material 30 for the rack shaft portion where the rack teeth portion 15 is to be formed is compressed, and the width dimension is expanded to obtain a rack shaft portion intermediate material 34.

Next, as illustrated in Fig. 5(c), the rack shaft portion intermediate material 34 is set in the bottom 37 of the retention hole 36 having a U-shaped cross section provided in the die 35. Then, as illustrated in Fig. 5(c) to Fig. 5(d), the rack shaft portion intermediate material 34 is strongly pushed toward the bottom 37 by a tooth forming punch 38 inserted into the retention hole 36. The processing surface, which is the tip-end surface of the tooth forming punch 38, has a shape corresponding to the rack teeth portion 15 to be obtained, that is, a shape in which the unevenness is inverted with respect to the shape of the rack teeth portion 15 to be obtained. Therefore, by strongly pushing the rack shaft portion intermediate material 34 toward the bottom 37 by the tooth forming punch 38, the processed surface of the middle section in the axial direction of the rack shaft portion intermediate material 34 which is pressed by the processing surface plastically deforms following the processing surface of the tooth forming punch 38, obtaining the rack shaft portion 28 having the rack teeth portion 15 as illustrated in Fig. 5(d). As necessary, in order to improve the shape accuracy and dimensional accuracy of the rack shaft portion 28, a sizing process is performed after the process of Fig. 5(d).

Mechanical properties such as hardness of the rack teeth portion 15 are improved by performing an appropriate heat treatment such as high-frequency heating to at least the rack teeth portion 15 of the rack shaft portion 28.

Of the outer peripheral surface of the obtained rack shaft portion 28, the radius of curvature Rrh of the rear portion of the rack teeth portion 15 is larger than the radius of curvature Rrs (= 1/2 of the outer-diameter dimension Drs of the material 30 for the rack shaft portion) of the outer peripheral surface of the material 30 for the rack shaft portion (Rrh > Rrs) due to the plastic deformation accompanying the formation of the rack teeth portion 15. On the other hand, the end portions on both sides in the axial direction of the material 30 for the rack shaft portion remain unprocessed at the end portions on both sides in the axial direction of the rack shaft portion 28. That is, the rack shaft portion 28 has small diameter shaft portions 39a, 39b having a cylindrical outer peripheral surface having the same outer-diameter dimension Drs as the material 30 for the rack shaft portion at the end portions on both sides in the axial direction.

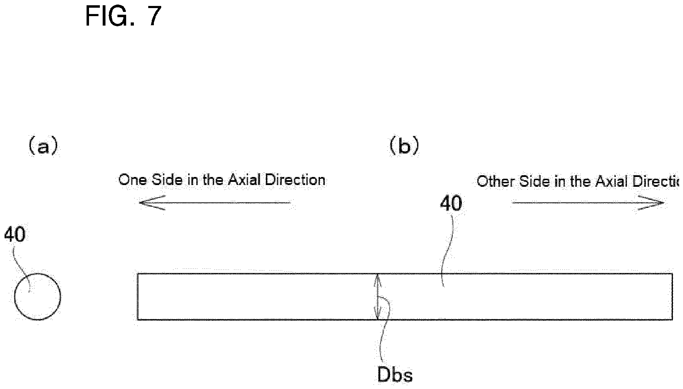

In the process of manufacturing the screw shaft portion 29, a material 40 for the screw shaft portion as illustrated in Fig. 7(a) and Fig. 7(b) is prepared. In this example, the material 40 for the screw shaft portion is made of metal, and is a solid round bar having a cylindrical shape. As the metal material of the material 40 for the screw shaft portion, for example, various steels such as carbon steel for machine structure such as S48C and S53C and alloy steel can be employed. The material of the material 40 for the screw shaft portion may be the same as or different from the material 30 for the rack shaft portion of the rack shaft portion 28. In this example, the outer-diameter dimension Dbs of the material 40 for the screw shaft portion is the same as the outer-diameter dimension Drs of the material 30 for the rack shaft portion (Dbs=Drs). However, when carrying out the present invention, the outer-diameter dimension Dbs of the material 40 for the screw shaft portion and the outer-diameter dimension Drs of the material 30 for the rack shaft portion can be different (Dbs ≠ Drs).

In this example, a ball screw section 16 which is a first input section is formed on the outer peripheral surface of the material 40 for the screw shaft portion which is a material for the first shaft portion by cold rolling process which is plastic working. Particularly, in this example, a through-feed rolling process is employed as the cold rolling process.

In the through-feed rolling process, a pair of rolling dies (round dies) with their center axes tilted are used. Further, while maintaining the distance between the pair of rolling dies constant and rotating the pair of rolling dies in the same direction at the same speed, the material 40 for the screw shaft portion is provided in the axial direction between the pair of rolling dies. Furthermore, by performing a rolling process on the outer peripheral surface of the material 40 for the screw shaft portion while causing a advancing phenomenon in which the material 40 for the screw shaft portion moves in the axial direction between the pair of rolling dies, the ball screw section 16 is formed on the outer peripheral surface of the material 40 for the screw shaft portion. As a result, a screw shaft portion intermediate material 17 having the ball screw section 16 formed over the entire length in the axial direction of the outer peripheral surface as illustrated in Fig. 8(a) is obtained. In this example, when performing the through-feed rolling process, the material 40 for the screw shaft portion is provided between the pair of rolling dies with the other side in the axial direction of the material 40 for the screw shaft portion as the leading side so as to cause the material 40 for the screw shaft portion to move in the axial direction by advancing between the pair of rolling dies. Therefore, when performing the through-feed rolling process, the ball screw section 16 is gradually formed on the outer peripheral surface of the material 40 for the screw shaft portion from the other side in the axial direction to the one side in the axial direction. When carrying out the present invention, it is also possible to provide the material 40 for the screw shaft portion between the pair of rolling dies with the one side in the axial direction as the leading side.

In this example, during the through-feed rolling process, while the material 40 for the screw shaft portion is passing between the pair of rolling dies in the axial direction, the pair of rolling dies are released in a direction away from each other in the radial direction. That is, the through-feed rolling process ends at the time when the pair of rolling dies are released in a direction away from each other in the radial direction. Of the ball screw section 16, the range in the axial direction corresponding to the end portion on the other side in the axial direction initially provided between the pair of rolling dies and the range in the axial direction corresponding to the end portion on the one side in the axial direction which was in contact with the pair of rolling dies approximately at the final phase become the incompletely rolled portion 43, and the remaining range in the axial direction corresponding to the middle section in the axial direction of the ball screw section 16 becomes the completely rolled portion 42. In this example, the pair of rolling dies are released in a direction away from each other in the radial direction at the time when the ball screw section 16 having a predetermined length dimension is formed. Specifically, the predetermined length dimension is the length dimension of the entire screw shaft portion intermediate material 17. That is, in this example, of the outer peripheral surface of the screw shaft portion 29 on which the ball screw section 16 is formed, the predetermined range in the axial direction including the end portion in the axial direction on the side joined to the rack shaft portion 28 is the entire axial direction of the screw shaft portion 29.

In this example, since the through-feed rolling process is terminated before the material 40 for the screw shaft portion completely passes between the pair of rolling dies, it is possible to reduce the cycle time and to improve the life of the pair of rolling dies.

When the ball screw section 16 is formed by the rolling process, it is also possible to employ other types of rolling processes such as an in-feed rolling process and a plate rolling process instead of the through-feed rolling process.

Of the ball screw section 16 of the screw shaft portion intermediate material 17, at least the completely rolled portion 42 is appropriately heat-treated by high-frequency heating or the like so as to improve mechanical properties such as hardness of the completely rolled portion 42.

Next, in this example, based on the male thread groove 55 of the completely rolled portion 42 of the screw shaft portion intermediate material 17, a shaving processes such as turning which is a cutting process, grinding, polishing, and the like is performed on the outer peripheral surface of the end portion on the one side in the axial direction of the incompletely rolled portion 43 located on the one side in the axial direction of the screw shaft portion intermediate material 17. By doing this, a gripped section 56 for centering, which is a cylindrical surface coaxial with the male thread groove 55 of the completely rolled portion 42, is formed on the outer peripheral surface of the end portion on the one side in the axial direction of the screw shaft portion intermediate material 17. In other words, a small diameter shaft portion 41 having an outer peripheral surface as the gripped section 56 is formed at the end portion on the one side in the axial direction of the screw shaft portion intermediate material 17. As a result, the screw shaft portion 29 as illustrated in Fig. 8(b) is obtained. In the screw shaft portion 29 of this example, since the gripped section 56 is formed based on the male thread groove 55, the axis of the gripped section 56 does not deviate from the axis of the ball screw section 16, and the gripped section 56 is coaxial with the ball screw section 16.

The gripped section 56 can be configured with a perfectly cylindrical surface as illustrated, alternatively, it is also possible to be configured with a cylindrical surface with the groove bottom of the ball screw section 16 remaining. In this example, although only the end portion on the one side in the axial direction of the incompletely rolled portion 43 on the one side in the axial direction of the screw shaft portion intermediate material 17 is shaved to form the gripped section 56, it is also possible to shave the entire range in the axial direction of the incompletely rolled portion 43 to form the gripped section 56.

Here, although it is out of the technical scope of the present invention, it is also possible to make the end portion on the one side in the axial direction of the material 40 for the screw shaft portion a non-rolling portion by terminating the rolling process earlier when terminating the through-feed rolling process before the material 40 for the screw shaft portion completely passes between the pair of rolling dies, and the outer peripheral surface of the non-rolling portion as it is can be used as the gripping potion.

Alternatively, when carrying out the present invention, it is also possible to form the ball screw section 16 by a shaving process.

Of the screw shaft portion 29 manufactured in this way, the outer-diameter dimension (the outer-diameter dimension Dbg of the completely rolled portion 42) of the range in the axial direction in which the ball screw section 16 is formed is larger than the outer-diameter dimension Dbs of the material 40 for the screw shaft portion due to the plastic deformation accompanying the rolling process (Dbg > Dbs). On the other hand, the outer-diameter dimension of the small diameter shaft portion 41 is about the same as the outer-diameter dimension Dbs of the material 40 for the screw shaft portion (that is, a value that is the same as or slightly smaller than or slightly larger than Dbs), in other words, it is equivalent to Dbs.

Next, a process of connecting the rack shaft portion 28 and the screw shaft portion 29 by friction welding will be described. The friction welding is a method of joining two metal members by abutting each other and rotating relative to each other while applying pressure, and utilizing the frictional heat generated at the abutting portion.

When connecting the rack shaft portion 28 and the screw shaft portion 29 by friction welding, first, the rack shaft portion 28 and the screw shaft portion 29 are arranged coaxially by centering the rack shaft portion 28 and the screw shaft portion 29, and the end surface of the end portion on the other side in the axial direction of the rack shaft portion 28 and the end surface of the small diameter shaft portion 41 which is the end portion on the one side in the axial direction of the screw shaft portion 29 are abutted against each other to apply pressure. In this state, frictional heat is generated at the abutting portion by rotating the rack shaft portion 28 and the screw shaft portion 29 relative to each other. After the abutting portion is brought into a high temperature and high-pressure state by doing this, the relative rotation is stopped. As a result, the linear motion shaft 9 in which the abutting portion became the friction welding portion 44 as the abutting portion was cooled is obtained.

Particularly, in this example, when performing the friction welding, the rack shaft portion 28 and the screw shaft portion 29 are centered by gripping the gripped section 56 of the screw shaft portion 29 with the first gripping tool 57 for centering (see

Fig. 3(a) and Fig. 8(b)) and by gripping the outer peripheral surface of the small diameter shaft portion 39b of the rack shaft portion 28 with the second gripping tool 58 for centering (see Fig. 3(a) and Fig. 6(a)). In this state, while rotating the screw shaft portion 29 and maintaining the rack shaft portion 28 non-rotating by rotationally driving the first gripping tool 57, the friction welding is performed by abutting the end portions in the axial direction of the rack shaft portion 28 and the screw shaft portion 29 on the side close to each other, that is, the end portion on the other side in the axial direction of the rack shaft portion 28 and the end portion on the one side in the axial direction of the screw shaft portion 29.

As the first gripping tool 57 and the second gripping tool 58, it is possible to employ various gripping tools such as a collet chuck and a hydraulic three-claw chuck. It is also possible to use the portion in the axial direction where the rack teeth portion 15 is located with respect to the rack shaft portion 28 as a gripped section for centering for gripping by the second gripping tool 58. Further, it is also possible to use the portion in the axial direction where the completely rolled portion 42 is located with respect to the screw shaft portion 29 as a gripped section for centering for gripping by the first gripping tool 57.

When connecting the rack shaft portion 28 and the screw shaft portion 29 by friction welding, as illustrated by the double-dashed line in Fig. 3(a), it is possible to arrange a sleeve 59 around the portion on the other side in the axial direction of the screw shaft portion 29. Specifically, in a state where the sleeve 59 is externally fitted onto the portion on the other side in the axial direction of the screw shaft portion 29 without any looseness in the radial direction, the friction welding can be performed by rotating the screw shaft portion 29 and abutting the end portion on the other side in the axial direction of the rack shaft portion 28 and the end portion on the one side in the axial direction of the screw shaft portion 29.

At the time of the friction welding, it is possible to prevent whirling of the screw shaft portion 29 by externally fitting the sleeve 59 onto the portion on the other side in the axial direction of the rotating screw shaft portion 29 without any looseness.

The sleeve 59 is preferably arranged around the portion on the other side in the axial direction of the screw shaft portion 29 which is opposite to the side connected to the rack shaft portion 28, and it is more preferable to be arranged around the range in the axial direction including part of the completely rolled portion 42. The length in the axial direction of the sleeve 59 is preferably 1/3 or less of the length in the axial direction of the screw shaft portion 29. Even if the length in the axial direction of the sleeve 59 is made longer than 1/3 of the length in the axial direction of the screw shaft portion 29, no further effect can be expected, and the work of externally fitting the sleeve 59 onto the screw shaft portion 29 becomes troublesome. Although the lower limit of the length in the axial direction of the sleeve 59 is not particularly limited, it is preferably as long as possible from the viewpoint of preventing the screw shaft portion 29 from whirling. In short, the length in the axial direction of the sleeve 59 is most preferably 1/3 of the length in the axial direction of the screw shaft portion 29.

In the manufacturing method of the linear motion shaft 9 of this example, the linear motion shaft 9 is obtained by connecting the end portions in the axial direction of the rack shaft portion 28 and the screw shaft portion 29 by friction welding after manufacturing the rack shaft portion 28 having a rack teeth portion 15 and the screw shaft portion 29 having the ball screw section 16 as separate shafts from each other. Therefore, in the case that a problem occurs in the processing of the rack teeth portion 15 in the manufacturing process of the rack shaft portion 28, only the rack shaft portion 28 may be discarded, and in the case that a problem occurs in the processing of the ball screw section 16 in the manufacturing process of the screw shaft portion 29, only the screw shaft portion 29 may be discarded. That is, in the case that a problem occurs in processing only one of the rack teeth portion 15 and the ball screw section 16, it is possible to avoid the inconvenience of having to discard the entire linear motion shaft 9.

In the manufacturing method of the linear motion shaft 9 of this example, the rack teeth portion 15 is formed by cold forging. Therefore, compared with the case where the rack teeth portion 15 is formed by a shaving process such as cutting, the material yield can be improved and the processing time can be shortened. Particularly, in this example, although the rack teeth portion 15 has a structure (VGR structure) in which specifications such as a tooth pitch, a tooth shape, and an inclination angle of a tooth trace are changed according to a position in the axial direction, it is difficult to accurately form the rack teeth portion 15 having a VGR structure by a cutting process in a short time. On the other hand, in this example, since the rack teeth portion 15 is formed by cold forging, it is easy to form the rack teeth portion 15 with high accuracy in a short time by forming the processing surface of the tooth forming punch 38 (Fig. 5) into a shape that matches the rack teeth portion 15 to be obtained.

In the manufacturing method of the linear motion shaft 9 of this example, the ball screw section 16 is formed by a cold rolling process which is a plastic working. Therefore, compared with the case where the ball screw section 16 is formed by a shaving process such as cutting, the material yield can be improved and the processing time can be shortened. Particularly, in this example, since a through-feed rolling process is adopted as a cold rolling process, the completely rolled portion 42 of the ball screw section 16 can be formed in a short time in a wide range in the axial direction of the middle section in the axial direction of the screw shaft portion 29. Further, the completely rolled portion 42 of the ball screw section 16 can be provided in a wide range in the axial direction of the end portion on the other side in the axial direction of the linear motion shaft 9 after completion. Therefore, the engageable range of the balls 24 of the ball screw mechanism 20 with respect to the linear motion shaft 9 can be widened in the axial direction. As a result, the flexibility of the product design layout, more specifically, the degree of freedom of the installation location of the ball nut 23 or the like with respect to the housing 13 in the axial direction can be increased.

When the ball screw section 16 is formed by the through-feed rolling process, the incompletely rolled portion 43 is formed at the end portions on both sides in the axial direction of the ball screw section 16. Since the incompletely rolled portion 43 has less stable lead groove shape accuracy and insufficient thread peak height than the completely rolled portion 42, it cannot be used as a rolling portion of the balls 24 of the ball screw mechanism 20. However, in this example, the small diameter shaft portion 41 is formed by shaving at least the outer peripheral surface of the end portion on the one side in the axial direction of the screw shaft portion intermediate material 17, and the outer peripheral surface of the small diameter shaft portion 41 is effectively used as a gripped section 56 for centering when performing friction welding. Therefore, with this example, it is possible to sufficiently suppress the waste of materials as well as to manufacture the screw shaft portion 29 in a short time.

In this example, friction welding is adopted as a method for connecting the end portions in the axial direction of the rack shaft portion 28 and the screw shaft portion 29 to each other. Since the friction welding can shorten the time required for connecting, the manufacturing efficiency of the linear motion shaft 9 can be improved and the connectability between different materials can be improved, so that the connectability between the rack shaft portion 28 and the screw shaft portion 29 can be high even when the rack shaft portion 28 and the screw shaft portion 29 are made of different materials.

In this example, when performing the friction welding, the gripped section 56 of the screw shaft portion 29 gripped by the first gripping tool 57 is located at the end portion of the screw shaft portion 29 on the one side in the axial direction which is the side connected to the rack shaft portion 28, and the outer peripheral surface of the small diameter shaft portion 39b of the rack shaft portion 28 gripped by the second gripping tool 58 is located at the end portion of the rack shaft portion 28 on the other side in the axial direction which is the side connected to the screw shaft portion 29. Therefore, when performing the friction welding, it is possible to sufficiently suppress the whirling in the radial direction between the end portions of the rack shaft portion 28 and the screw shaft portion 29 on the side close to each other.

The gripped section 56 of the screw shaft portion 29 gripped by the first gripping tool 57 is formed coaxially with the ball screw section 16 by a shaving process based on the male thread groove 55 of the ball screw section 16 after forming the ball screw section 16 and performing the heat treatment. Therefore, of the screw shaft portion 29, the coaxiality between the ball screw section 16 and the gripped section 56 gripped by the first gripping tool 57 can be well secured. Therefore, the centering accuracy of the ball screw section 16 can be high when compared to the case where the friction welding is performed by chucking the unprocessed support portion of the material for shaft portion that does not form a thread groove like the method described in JP 2005-247163A. As a result, with this example, it is possible to secure good coaxiality between the portion having the rack teeth portion 15 and the portion having the ball screw section 16 with respect to the linear motion shaft 9. In other words, the straightness of the linear motion shaft 9 can be improved.

Regarding the rack shaft portion 28, the rack teeth portion 15 is formed by performing cold forging to the middle section in the axial direction of the material 30 for the rack shaft portion, and at the same time, the unprocessed end portions on both sides in the axial direction of the material 30 for the rack shaft portion are made as small diameter shaft portions 39a, 39b. Here, when manufacturing the rack shaft portion 28 by performing cold forging on the material 30 for the rack shaft portion, as illustrated in Fig. 5(a) to Fig. 5(d), in a state where a part in the circumferential direction of the outer peripheral surface of the material 30 for the rack shaft portion or the rack shaft portion intermediate material 34 is restrained by the receiving mold 31 or the die 35, a process is performed on the material 30 for the rack shaft portion or the rack shaft portion intermediate material 34.

When the coaxiality between the processed portion and the unprocessed portion of the rack shaft portion 28 decreases due to the formation of the rack teeth portion 15, a bending process or a shaving process is performed to the processed portion and/or the unprocessed portion before connecting the rack shaft portion 28 and the screw shaft portion 29 by friction welding. By doing this, the coaxiality between the portion having the rack teeth portion 15 of the rack shaft portion 28 and the portion separated from the rack eth portion 15 in the axial direction is improved. That is, the straightness of the rack shaft portion 28 is improved. In this way, by connecting the rack shaft portion 28 and the screw shaft portion 29 by friction welding after ensuring sufficient straightness of the rack shaft portion 28, with respect to the completed linear motion shaft, the coaxiality between the portion having the rack teeth portion 15 and the portion having the ball screw section 16 is well secured.

When there is almost no decrease in the coaxiality between the processed portion and the unprocessed portion of the rack shaft portion 28 due to the formation of the rack teeth portion 15, it is also possible to connect the rack shaft portion 28 after forming the rack teeth portion 15 directly to the screw shaft portion 29 by friction welding.

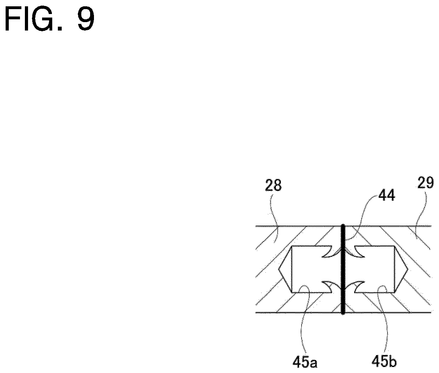

The linear motion shaft 9 of this example is configured by connecting the end portion on the other side in the axial direction of the small diameter shaft portion 39b having the outer-diameter dimension approximately the same as the outer-diameter dimension of the material 30 for the rack shaft portion and the end portion on the one side in the axial direction of the small diameter shaft portion 41 having the outer-diameter dimension approximately the same as the outer-diameter dimension of the material 40 for the screw shaft portion by friction welding. Therefore, for example, the area of the portion to be friction-welded can be small as compared with the case where the concavo-convex fitting portions are friction-welded to each other, and it is possible to reduce the size of equipment by reducing the pressing force when performing friction welding and to reduce costs by shortening the cycle time. Here, when carrying out the present invention, in order to further reduce the area of the portions to be friction-welded, it is also possible to form bottomed concave holes 45a, 45b that are open on the end surface in the axial direction on the side closer to each other at the end portions in the axial direction of the rack shaft portion 28 and the screw shaft portion 29 on the side close to each other as illustrated in Fig. 9.

When carrying out the method for manufacturing the linear motion shaft of the present invention, the plastic working such as forging and a rolling process for forming the rack teeth portion and the ball screw section can be performed not only in cold, but also in warm or hot. Even when the plastic working is performed in warm or hot, advantageous effects such as improving the material yield and shortening the processing time can be obtained compared to the case where the rack teeth portion and the ball screw section are formed by a shaving process.

### [Second Example]

A second example of an embodiment of the present invention will be described with reference to Fig. 8(a) to Fig. 8(c). In this example, in the process of manufacturing the screw shaft portion 29, the specific method of the through-feed rolling process for forming the ball screw section 16 is different from the first example. In this example, the through-feed rolling process terminates when the entire material 40 for the screw shaft portion completely passes between the pair of rolling dies in the axial direction. Therefore, in this example, of the ball screw section 16, the range in the axial direction corresponding to the end portion on the other side in the axial direction initially provided between the pair of rolling dies and the range in the axial direction corresponding to the end portion on the one side in the axial direction that last passed between the pair of rolling dies become the incompletely rolled portion 43 of the ball screw section 16, and the remaining range in the axial direction corresponding to the middle section in the axial direction of the ball screw section 16 becomes the completely rolled portion 42.

According to this example, of the ball screw section 16 formed by the through-feed rolling process, the length in the axial direction of the incompletely rolled portion 43 on the one side in the axial direction can be sufficiently shorter than in the case of the first example. In other words, the length in the axial direction of the completely rolled portion 42 of the ball screw section 16 included in the screw shaft portion 29 can be longer than in the case of the first example. Therefore, the engageable range of the balls 24 of the ball screw mechanism 20 with respect to the linear motion shaft 9 can be made wider in the axial direction.

In this example, when the length in the axial direction of the incompletely rolled portion 43 on the one side in the axial direction is less than the length in the axial direction required for the gripped section 56 to be gripped by the first gripping tool 57, the shaving process is performed not only to the incompletely rolled portion 43 on the one side in the axial direction, but also to a part of the completely rolled portion 42 adjacent to the incompletely rolled portion 43 so as to secure the required length in the axial direction as the gripped section. However, from the viewpoint of sufficiently securing the length in the axial direction of the completely rolled portion 42, it is desirable to keep the length in the axial direction to shave the completely rolled portion 42 to the minimum necessary. Other configurations and operational effects are the same as in the first example.

### [Third Example]

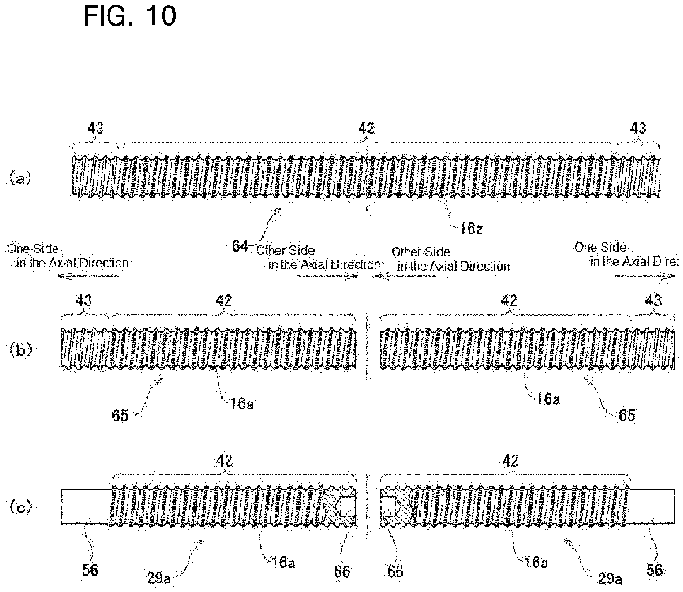

A third example of an embodiment of the present invention will be described with reference to Fig. 10(a) to Fig. 10(c). In this example, in the process of manufacturing the screw shaft portion 29a, first, a through-feed rolling process is performed to the outer peripheral surface of the material for the screw shaft portion having a dimension in the axial direction twice the dimension in the axial direction of the screw shaft portion 29a to be obtained and having a cylindrical shape, so as to form a ball screw section 16z. As a result, a first screw shaft portion intermediate material 64 having the ball screw section 16z over the entire length in the axial direction of the outer peripheral surface as illustrated in Fig. 10(a) is obtained. The ball screw section 16z has a completely rolled portion 42z in the middle section in the axial direction and incompletely rolled portions 43 at end portions on both sides in the axial direction.

Next, the first screw shaft portion intermediate material 64 is cut at the center position in the axial direction to obtain two second screw shaft portion intermediate materials 65 respectively having a ball screw section 16a on the outer peripheral surface as illustrated in Fig. 10(b). Each ball screw section 16a of the second screw shaft portion intermediate materials 65 has an incompletely rolled portion 43 at the end portion on each one side in the axial direction (the left side of the second screw shaft portion intermediate material 65 on the left side in Fig. 10(b), the right side of the second screw shaft portion intermediate material 65 on the right side in Fig. 10(b)), and has a completely rolled portion 42 over the entire length in the axial direction of the remaining range in the axial direction.

Next, based on the male thread groove 55 of the completely rolled portion 42 of the second screw shaft portion intermediate material 65, a shaving process is performed to the outer peripheral surface of the incompletely rolled portion 43 so as to form a gripped section 56 for centering, which is a cylindrical surface coaxial with the male thread groove 55 of the completely rolled portion 42. In other words, a small diameter shaft portion 41 having the gripped section 56 whose outer peripheral surface is coaxial with the ball screw section 16a is formed at the end portion on the one side in the axial direction of the second screw shaft portion intermediate material 65. Further, of the second screw shaft portion intermediate material 65, a bottomed screw hole 66 is formed at the end portion on the other side in the axial direction opposite to the end portion on the one side in the axial direction provided with the incompletely rolled portion 43 (small diameter shaft portion 41) (the right side of the second screw shaft portion intermediate material 65 on the left side in Fig. 10(b), the left side of the second screw shaft portion intermediate material 65 on the right side in Fig. 10(b)). As a result, a screw shaft portion 29a as illustrated in Fig. 10(c) is obtained. A male screw portion provided at the base end portion of the tie rod 11 is screwed into the screw hole 66.

The screw shaft portion 29a is connected to the rack shaft portion 28 (see Fig. 6(a) and Fig. 6(b)) by friction welding to obtain the linear motion shaft 9 (Fig. 1 to Fig. 3(b)). When performing friction welding, the gripped section 56 of the screw shaft portion 29a is gripped by the first gripping tool 57.

The screw shaft portion 29a of this example has the completely rolled portion 42 from the middle section in the axial direction to the end portion on the other side in the axial direction of the outer peripheral surface excluding the end portion on the one side in the axial direction provided with the gripped section 56. Therefore, with the screw shaft portion 29a of this example, it is easier to secure a length in the axial direction of the completely rolled portion 42 longer than the screw shaft portion 29 of the first example. That is, according to this example, it is easier to secure a loner engageable range of the balls 24 of the ball screw mechanism 20 with respect to the linear motion shaft 9 in the axial direction than in the first example. Other configurations and operational effects are the same as in the first example.

### [Fourth Example]

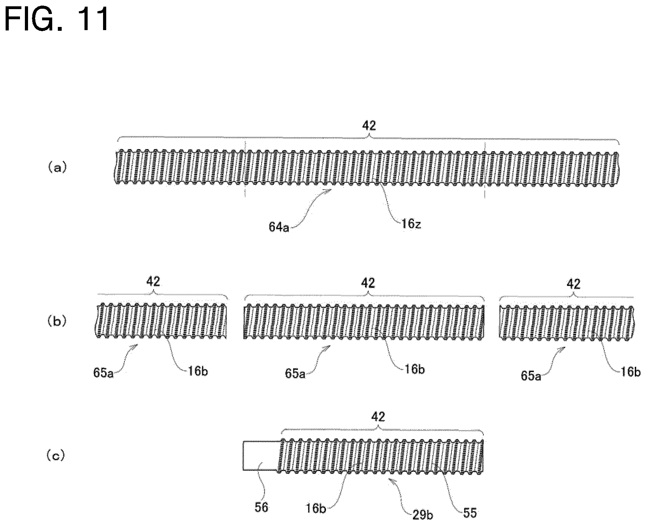

A fourth example of an embodiment of the present invention will be described with reference to Fig. 11(a) to Fig. 11(c). In this example, in the process of manufacturing the screw shaft portion 29b, a through-feed rolling process is performed to the outer peripheral surface of a long material for the screw shaft portion having a predetermined dimension in the axial direction that exceeds the dimension in the axial direction of the screw shaft portion 29b to be obtained, specifically, several times or more, preferably three times or more of the dimension in the axial direction of the screw saft portion 29b to be obtained and having a cylindrical shape to form a ball screw section 16z. As a result, a long first screw shaft portion intermediate material 64a having the ball screw section 16z on the outer peripheral surface as illustrated in Fig. 11(a) is obtained. The upper limit of the predetermined dimension in the axial direction of the material for the screw shaft portion is arbitrary and is determined according to the length of the available long material for the screw shaft portion.

Next, a part of the long first screw shaft portion intermediate material 64a is cut to obtain a second screw shaft portion intermediate material 65a having a ball screw section 16b over the entire length in the axial direction on the outer peripheral surface as illustrated in Fig. 11(b). Eventually, a plurality of, preferably three or more second screw shaft portion intermediate material 65a can be obtained from one first screw shaft portion intermediate material 64a. The ball screw section 16b of the second screw shaft portion intermediate material 65a is composed of only the completely rolled portion 42. That is, according to this example, the ball screw section 16b can be the completely rolled portion 42 over the entire length.

Further, the gripped section 56 for centering is formed at each end portion on one side in the axial direction of the second screw shaft portion intermediate material 65a by a shaving process. In this example, the second screw shaft portion intermediate material 65a has the completely rolled portion 42 over the entire length on the outer peripheral surface. Therefore, the end portion on the one side in the axial direction of the second screw shaft portion intermediate material 65a is shaved by the minimum length required for gripping by the first gripping tool 57 to form the gripped section 56. As a result, the screw shaft portion 29b as illustrated in Fig. 11(c) is obtained.

As in this example, in the second screw shaft portion intermediate material 65a obtained by cutting the first screw shaft portion intermediate material 64a after obtaining the long first screw shaft portion intermediate material 64a by performing the through-feed rolling process to the material for the screw shaft portion with a long shaft, of the completely rolled portion 42, the shape accuracy of the male thread groove 55 is good, but the shape accuracy of the outer peripheral surface of the thread peak is not always good. Therefore, in this example, based on the male thread groove 55 of the portion of the ball screw section which exists in the range in the axial direction separated from the end portion on one side in the axial direction in which the gripped section 56 for centering is to be formed, the gripped section 56 is formed by performing a shaving process to the end portion on the one side in the axial direction of the ball screw section 16b in which the gripped section 56 is to be formed.

The linear motion shaft 9 (Fig. 1 to Fig. 3(b)) is obtained by connecting the screw shaft portion 29b and the rack shaft portion 28 (see Fig. 6(a) and Fig. 6(b)) by friction welding. When preforming the friction welding, the gripped section 56 of the screw shaft portion 29 is gripped by the first gripping tool 57 for centering.

In this example, the screw shaft portion 29b is obtained by forming the gripped section 56 on the outer peripheral portion by shaving the end portion on the one side in the axial direction of the second screw shaft portion intermediate material 65a having the completely rolled portion 42 over the entire length by the minimum length required for gripping by the first gripping tool 57. Therefore, according to the screw shaft portion 29b of this example, it is easier to secure the length in the axial direction of the completely rolled portion 42 longer than the screw shaft portion 29a of the third example. That is, according to this example, it is easier to secure the engageable range of the balls 24 of the ball screw mechanism 20 with respect to the linear motion shaft 9 longer in the axial direction than in the third example.

Since the screw shaft portion 29b of this example has the completely rolled portion 42 to the end portion on the other side in the axial direction, at the time of friction welding, the sleeve 59 (see Fig. 3(a)) can be easily arranged around the range in the axial direction including a part of the completely rolled portion 42 of the screw shaft portion 29b. Other configurations and operational effects are the same as in the first and the second examples.

### [Fifth Example]

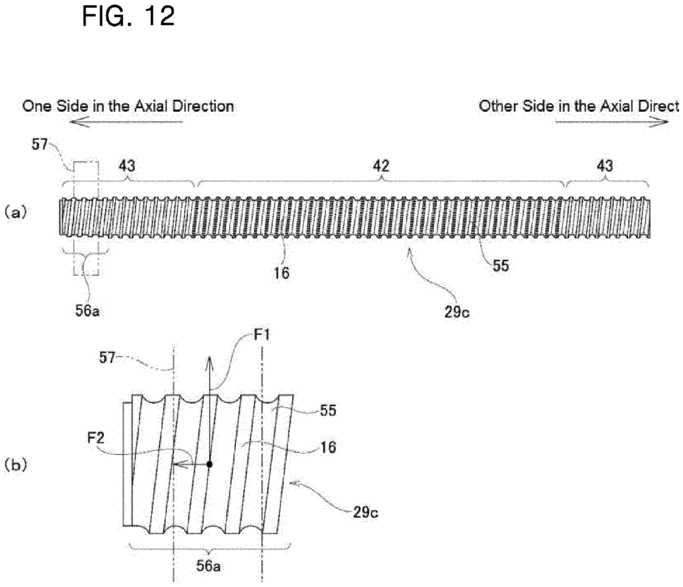

A fifth example of an embodiment of the present invention will be described with reference to Fig. 12(a) and Fig. 12(b). In this example, in the process of manufacturing the screw shaft portion 29c, the amount of shaving in the radial direction in the process of forming the gripped section 56a is reduced than in the first example. That is, in the first example, as illustrated in Fig. 8(b), the gripped section 56 which is a cylindrical surface is formed by shaving all the thread peaks existing at the end portion on the one side in the axial direction of the ball screw section 16 in which the gripped section 56 is to be formed. On the other hand, in this example, as illustrated in Fig. 12(a), the gripped section 56a coaxial with the male thread groove 55 of the completely rolled portion 42 is formed on the outer peripheral surface of the thread peak at the end portion on the one side in the axial direction by shaving only the radially outside portion of the thread peak existing at the end portion on the one side in the axial direction of the ball screw section 16 in which the gripped section 56a is to be formed. In this example, since the amount of shaving in the radial direction in the process of forming the gripped section 56a can be reduced, it is possible to perform the work of forming the gripped section 56a in a short time.

In this example, the direction of rotation of the screw shaft portion 29c in the process of connecting the rack shaft portion 28 (see Fig. 1 to Fig. 3(b)) and the screw shaft portion 29c by friction welding is devised. That is, in this example, in the process of connecting the rack shaft portion 28 and the screw shaft portion 29c by friction welding, the screw shaft portion 29c is rotated in a direction of rotation in which the thread peak of the ball screw section 16 appears to move to the one side in the axial direction, which is a direction approaching the rack shaft portion 28, as the screw shaft portion 29c rotates when the ball screw section 16 is viewed from the outside in the radial direction. Specifically, in Fig. 12(a) and Fig. 12(b), when the screw shaft portion 29c is viewed from the right in the axial direction, the screw shaft portion 29c is rotated clockwise. As a result, as illustrated in Fig. 12(b), the force F1 in the direction of rotation acting on the screw shaft portion 29c from the first gripping tool 57 is converted into a thrust F2 directed to the one side in the axial direction, which is a direction approaching the rack shaft portion 28, at the edge portion of the thread peak of the ball screw section 16 located at the gripped section 56a. Then, based on the thrust F2, the pressure of the friction welding portion 44 (see Fig. 1, Fig. 3(a) and Fig. 3(b)) can be increased. Therefore, when connecting the rack shaft portion 28 and the screw shaft portion 29c by friction welding, securing the pressure at the abutting portion between the rack shaft portion 28 and the screw shaft portion 29c becomes easy, and the effect of improving the connecting strength by the friction welding portion 44 can be expected by increasing the pressure.

In this example, the difference in the outer diameter between the gripped section 56a and the portion other than the gripped section 56a of the screw shaft portion 29c can be reduced as much as the amount of shaving in the radial direction in the process of forming the gripped section 56a is reduced. Therefore, as the first gripping tool 57 for gripping the gripped section 56a, it becomes easy to use a collet chuck having high centering accuracy. That is, when a collet chuck is used as the first gripping tool 57, the gripped section 56a is gripped by the collet chuck by reducing the diameter of the collet chuck after passing the portion other than the gripped section 56a through the center hole of the collet chuck in the axial direction. However, the diameter-reducible amount of the collet chuck at this time is usually limited to a small value of about several millimeters. Therefore, when the difference in the outer diameter between the gripped section 56a and the portion other than the gripped section 56a of the screw shaft portion 29c is larger than the diameter-reducible amount of the collet chuck, there is a possibility that the gripped section 56a cannot be gripped by the collet chuck. On the other hand, in the screw shaft portion 29a of this example, since the difference in the outer diameter between the gripped section 56a and the gripped section 56a is small, it becomes easy to grip the gripped section 56a with a typical collet chuck. When carrying out the present invention, when the difference in the outer diameter between the gripped section and the portion other than the gripped section becomes large, it is preferable to use a specifically shaped collet chuck having a large diameter-reducible amount or a hydraulic three-claw. Other configurations and operational effects are the same as in the first example.

### [Sixth Example]

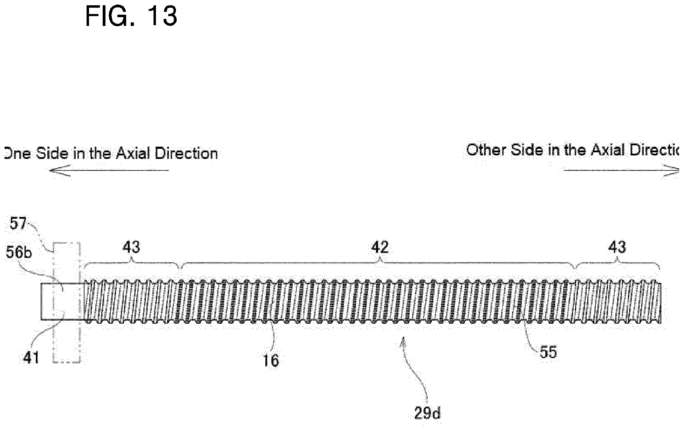

A sixth example of an embodiment of the present invention will be described with reference to Fig. 13. In this example, in the process of manufacturing the screw shaft portion 29d, when the ball screw section 16 is gradually formed from the other side in the axial direction to the one side in the axial direction by the through-feed rolling process on the material 40 for the screw shaft portion (see Fig. 7), the end portion on the one side in the axial direction of the material 40 for the screw shaft portion is left as a non-rolling portion by terminating the rolling process earlier than in the first example. Then, the gripped section 56b is formed by shaving the outer peripheral surface of the non-rolling portion based on the male thread groove 55 of the completely rolled portion 42 of the ball screw section 16. In this example, since the length in the axial direction of the portion in which the rolling process is performed on the material 40 for the screw shaft portion can be shortened, the time required to form the ball screw section 16 can be shortened accordingly.

When carrying out this example, it is also possible to form the ball screw section 16 by a shaving process. If the ball screw section 16 is formed by a shaving process, the effect that the time required for forming the ball screw section 16 according to this example can be shorted can be obtained more remarkably. Other configurations and operational effects are the same as in the first example.

### [Seventh Example]

A seventh example of an embodiment of the present invention will be described with reference to Fig. 13. In this example, as in the case of the sixth example, in the process of manufacturing the screw shaft portion 29d, the ball screw section 16 is formed only in a portion other than the end portion on the one side in the axial direction of the material 40 for the screw shaft portion by performing a rolling process to the material 40 for the screw shaft portion (see Fig. 7) so as to leave the end portion on the one side in the axial direction of the material 40 for the screw shaft portion as a non-rolling portion. Then, the gripped section 56b is formed by shaving the outer peripheral surface of the non-rolling section based on the male thread groove 55 of the completely rolled portion 42 of the ball screw section 16.

In this example, the method of the rolling process for forming the ball screw section 16 is different from the sixth example. In this example, the ball screw section 16 illustrated in Fig. 11 is gradually formed from the one side in the axial direction to the other side in the axial direction. Therefore, by sandwiching the middle section in the axial direction separated from the end portion on the one side in the axial direction of the material 40 for the screw shaft portion in which the gripped section 56b is to be formed, that is, the end portion on the one side in the axial direction of the portion in which the ball screw section 16 is to be formed from both sides in the radial direction by the pair of rolling dies first, the rolling process of the ball screw section 16 is initiated. After the rolling process is initiated, the ball screw section 16 is gradually formed from the one side in the axial direction to the other side in the axial direction by moving the material 40 for the screw shaft portion toward the one side in the axial direction with respect to the pair of rolling dies. The advancing movement of the material 40 for the screw shaft portion is performed until the material 40 for the screw shaft portion completely comes out from between the pair of rolling dies to the one side in the axial direction. In the case of this example, the ball screw section 16 is formed by such a through-feed rolling process. The through-feed rolling process of this example can also be referred to as an in-feed rolling process in which an advancing movement occurs in the work. In any case, in the case of this example as well, the ball screw section 16 formed by the rolling process has the completely rolled portion 42 in the middle section in the axial direction, and has the pair of incompletely rolled portion 43 at both end portions in the axial direction. Other configurations and operational effects are the same as in the first and the sixth examples.

### [Eighth Example]

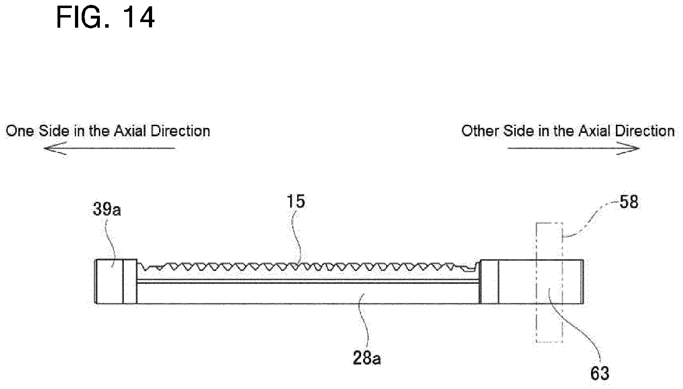

An eighth example of an embodiment of the present invention will be described with reference to Fig. 14. In this example, in the process of manufacturing the rack shaft portion 28a, a gripped section 63 for centering is formed on the outer peripheral surface of the end portion on the other side in the axial direction on the side close to the screw shaft portion 29 (see Fig. 3) of the rack shaft portion 28a by a shaving process based on the rack teeth portion 15 after forming the rack teeth portion 15 and performing a heat treatment. By doing this, the gripped section 63 is finished so as to be coaxial with the portion of the rack shaft portion 28a having the rack teeth portion 15. Then, in the process of connecting the rack shaft portion 28a and the screw shaft portion 29 by friction welding, the gripped section 63 is gripped by the second gripping tool 58. In this example, the coaxiality between the portion having the rack teeth portion 15 and the portion having the ball screw section 16 (see Fig. 1 to Fig. 3(b)) can be further improved. Other configurations and operational effects are the same as in the first example.

### [Nineth Example]

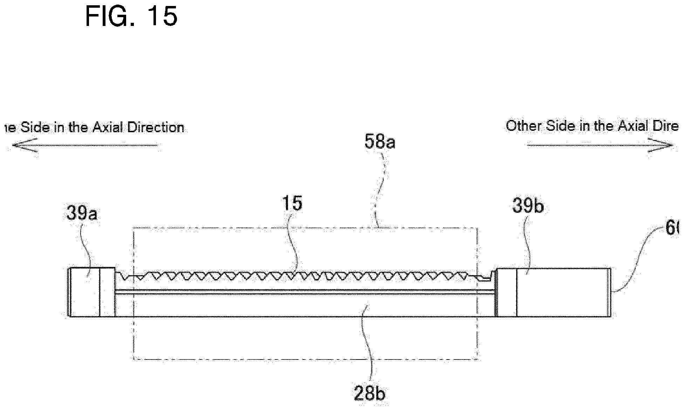

A nineth example of an embodiment of the present invention will be described with reference to Fig. 15. In this example, in the process of connecting the rack shaft portion 28b and the screw shaft portion 29 (see Fig. 3) by friction welding, the portion having the rack teeth portion 15 of the rack shaft portion 28b is gripped by the second gripping tool 58a for centering. Therefore, it is possible to sufficiently secure the centering accuracy of the portion having the rack teeth portion 15.

In this example, in the process of connecting the rack shaft portion 28b and the screw shaft portion 29 by friction welding, when the dimension in the axial direction of the rack shaft portion 28b protruding from the second gripping tool 58s to the other side in the axial direction which is the side to be connected to the screw shaft portion 29 becomes longer, the protruding portion is likely to cause vibration when it comes into contact with the screw shaft portion 29 on the rotating side. Therefore, from the view point of improving the quality of the friction welding portion 44 (see Fig. 3) and the coaxiality between the portion having the rack teeth portion 15 and the portion having the ball screw section 16 (see Fig. 3), it is desirable to regulate the position in the axial direction of the portion to be gripped by the second gripping tool 58a so that the dimension in the axial direction of the protruding portion is as short as possible.

In this example, in the process of connecting the rack shaft portion 28b and the screw shaft portion 29 by friction welding, in order to make the protruding portion difficult to vibrate when the end surface on the other side in the axial direction of the rack shaft portion 28b on the stationary side and the end surface on the one side in the axial direction of the screw shaft portion 29 on the rotating side come in contact, an orthogonal plane 60, which is a plane orthogonal to the center axis of the portion having the rack teeth portion 15, is formed on the end surface by shaving the end surface on the other side in the axial direction of the rack shaft portion 28b after forming the rack teeth portion 15 and performing a heat treatment in the process of manufacturing the rack shaft portion 28b. Other configurations and operational effects are the same as in the first example.

In the first to ninth examples of an embodiment of the present invention, in the process of connecting the rack shaft portion and the screw shaft portion by friction welding, the screw shaft portion is on the rotating side and the rack shaft portion is on the non-rotating side, however, when forming a gripped section in the rack shaft portion, it is possible that the screw shaft portion is on the non-rotating side and the rack shaft portion is on the rotating side. Alternatively, in the process of connecting the rack shaft portion and the screw shaft portion by friction welding, it is also possible to rotate the screw shaft portion and the rack shaft portion in directions opposite to each other.

### [Tenth Example]

A tenth example of an embodiment of the present invention will be described with reference to Fig. 15. The linear motion shaft 9a of the steering device of this example is formed by connecting one rack shaft portion 28 having one rack teeth portion 15 on the outer peripheral surface and the other rack shaft portion 28c having the other rack teeth portion 15a on the outer peripheral surface by friction welding. The one rack teeth portion 15 meshes with the pinion teeth portion 14 of the pinion shaft 8, and the other rack teeth portion 15a meshes with the pinion teeth portion 14a of a different pinion shaft 8a. While the control section of the electric assist device 6a controls the amount of energization to the electric motor 19a according to the direction and magnitude of the torque detected by the torque sensor 18 and the vehicle speed signal, the electric motor 19a rotationally drives the different pinion shaft 8a via a speed reducer 61. Then, by converting the rotational motion of the different pinion shaft 8a into the linear motion of the linear motion shaft 9a by the meshing portion between the other rack teeth portion 15a and the pinion teeth portion 14a, a steering auxiliary power is applied to the linear motion shaft 9a. That is, in this example, the other rack teeth portion 15a corresponds to the first input section, the other rack shaft portion 28c corresponds to the first shaft portion, and the one rack shaft portion 28 corresponds to the second shaft portion.

The linear motion shaft 9a further includes a friction welding portion 44 that connects the one rack shaft portion 28 and the other rack shaft portion 28c.

The method for manufacturing the linear motion shaft 9a of this example includes a process of manufacturing the one rack shaft portion 28, a process of manufacturing the other rack shaft portion 28c, and a process to connect the one rack shaft portion 28 and the other rack shaft portion 28c by friction welding.

The process of manufacturing the one rack shaft portion 28 is the same as that of the first example.

The process of manufacturing the other rack shaft portion 28c further includes a process of forming a gripped section 56c after the same process as the process of manufacturing the one rack shaft portion 28. In the process of forming the gripped section 56c, the gripped section 56c for centering is formed by a shaving process on the outer peripheral surface of the end portion in the axial direction of the other rack shaft portion 28c on the side close to the one rack shaft portion 28 based on the other rack teeth portion 15a after forming the other rack teeth portion 15a and performing the heat treatment. By doing this, the gripped section 56c is finished so as to be coaxial with the portion in the axial direction having the other rack teeth portion 15a.

In the process of connecting the one rack shaft portion 28 and the other rack shaft portion 28c by friction welding, while the gripped section 56c of the other rack shaft portion 28c is gripped by the first gripping tool 57 (see Fig. 3(a)) for centering, the outer peripheral surface of the small diameter shaft portion 39b of the one rack shaft portion 28 is gripped by the second gripping tool 58 (see Fig. 3(a)) for centering. In this state, as well as rotating the other rack shaft portion 28c by rotationally driving the first gripping tool 57, by abutting the end portions in the axial direction of the one rack shaft portion 28 and the other rack shaft portion 28c while holding the one rack shaft portion 28 without rotating, the one rack shaft portion 28 and the other rack shaft portion 28c are connected by friction welding.

According to this example, it is possible to improve the coaxiality between the portion having the one rack teeth portion 15 and the portion having the other rack teeth portion 15a.

In this example, in the process of connecting the one rack shaft portion 28 and the other rack shaft portion 28c by friction welding, the one rack shaft portion 28 is on the non-rotating side and the other rack shaft portion 28c is on the rotating side, however, it is also possible that the one rack shaft portion 28 is on the rotting side and the other rack shaft portion 28c is on the non-rotating side as long as the one rack shaft portion 28 comprises a gripped section. Alternatively, it is also possible to rotate the one rack shaft portion 28 and the other rack shaft portion 28c in directions opposite to each other. Other configurations and operational effects are the same as in the first example.

The first to the tenth examples of an embodiment of the present invention may be appropriately combined and implemented as long as no contradiction occurs.

The present invention can also be applied to, for example, a linear motion shaft of the steering device of a type that applies a steering auxiliary power to a portion other than the linear motion shaft or a steer-by-wire steering device, the linear motion shaft comprising a rack shaft portion having a rack teeth portion on the outer peripheral surface, an extension shaft portion which is a cylindrical or columnar round bar, and a friction welding portion in which the end portions in the axial direction of the rack shaft portion and the extension shaft portion are connected. In this case, in the process of connecting the end portions in the axial direction on the sides closer to each other of the rack shaft portion and the extension shaft portion, it is possible that one of the rack shaft portion corresponding to the first shaft portion and the extension shaft portion corresponding to the second shaft portion is on the rotating side and the other is on the non-rotating side, alternatively, they are rotated in directions opposite to each other.

Further, the present invention can also be applied to, for example, a linear motion shaft of a steer-by-wire steering device, the linear motion shaft comprising a screw shaft portion having a ball screw section on the outer peripheral surface, an extension saft portion which is a cylindrical or columnar round bar, and a friction welding portion which is a joint between the screw shaft portion and the extension shaft portion. In this case, in the process of connecting the end portions in the axial direction of the screw shaft portion ad the extension shaft portion by friction welding, it is possible that one of the screw shaft portion corresponding to the first shaft portion and the extension shaft portion corresponding to the second shaft portion is on the rotating side and the other is on the non-rotating side, alternatively, they are rotated in directions opposite to each other.

### Reference Signs List

- 1: Steering wheel
- 2: Steering shaft
- 3a, 3b: Universal joints
- 4: Intermediate shaft
- 5: Steering gear unit
- 6, 6a, 6b: Electric assist device
- 7: Input shaft
- 8, 8a: Pinion shaft
- 9, 9a: Linear motion shaft
- 10: Ball joint
- 11: Tie rods
- 12: Steered wheel
- 13: Housing
- 14, 14a: Pinion teeth portion
- 15, 15a: Rack teeth portion
- 16, 16a, 16b, 16z: Ball screw section
- 17: Screw shaft portion intermediate material
- 18: Torque sensor
- 19, 19a: Electric motor
- 20: Ball screw mechanism
- 21: Output shaft
- 22: Female thread groove
- 23: Ball nut
- 24: Balls
- 25: Drive pulley
- 26: Endless belt
- 27: Driven pulley
- 28, 28a, 28b, 28c: Rack shaft portion
- 29, 29a, 29b, 29c, 29d: Screw shaft portion
- 30: Material for the rack shaft portion
- 31: Receiving mold
- 32: Concave groove portion
- 33: Pressing punch
- 34: Rack shaft portion intermediate material
- 35: Die
- 36: Retention hole
- 37: Bottom
- 38: Tooth forming punch
- 39a, 39b: Small diameter shaft portion
- 40: Material for the screw shaft portion
- 41: Small diameter shaft portion
- 42, 42z: Completely rolled portion
- 43: Incompletely rolled portion
- 44: Friction welding portion
- 45a, 45b: Concave holes
- 54: Rolling bearing
- 55: Male thread groove
- 56: Gripped section
- 57: First gripping tool
- 58: Second gripping tool
- 59: Sleeve
- 60: Orthogonal plane
- 61: Speed reducer
- 62: Extension shaft portion
- 63: Gripped section
- 64, 64a: First screw shaft portion intermediate material
- 65, 65a: Second screw shaft portion intermediate material
- 66: Screw hole

## Claims

1. A method for manufacturing a linear motion shaft for a steering device,
the linear motion shaft comprising: a first shaft portion having a first input section on an outer peripheral surface thereof to which a driving force for making linear motion in an axial direction is input, a second shaft portion, and a joint between the first shaft portion and the second shaft portion,
the manufacturing method comprising:
a process of manufacturing the first shaft portion, and
a process of connecting the first shaft portion and the second shaft portion by friction welding,
the process of manufacturing the first shaft portion including a process of forming the first input section in a material for the first shaft portion and a process of forming a gripped section for centering on an outer peripheral surface of an end portion in the axial direction of the first shaft portion on a side connected to the second shaft portion based on the first input section after forming the first input section, and
the friction welding is performed by abutting an end portion in the axial direction of the first shaft portion and an end portion in the axial direction of the second shaft portion in a state where the gripped section of the first shaft portion is gripped by a first gripping tool for centering and the second shaft portion is gripped by a second gripping tool for centering.

2. The method for manufacturing the linear motion shaft for a steering device according to claim 1, wherein the friction welding is performed while relatively rotating the first shaft portion and the second shaft portion by rotationally driving at least one of the first gripping tool and the second gripping tool.

3. The method for manufacturing the linear motion shaft for a steering device according to claim 2, wherein the friction welding is performed while rotating the first shaft portion by rotationally driving the first gripping tool and holding the second shaft portion without rotating.

4. The method for manufacturing the linear motion shaft for a steering device according to any of claims 1 to 3, wherein the first input section is composed of a ball screw section, and the process of forming the first input section is composed of a process of forming the ball screw section by a rolling process.

5. The method for manufacturing the linear motion shaft for a steering device according to claim 4, wherein the rolling process is a through-feed rolling process.

6. The method for manufacturing the linear motion shaft for a steering device according to claim 4 or 5, wherein, in the process of connecting the first shaft portion and the second shaft portion by friction welding, a sleeve is fitted around a portion of the first shaft portion which is on a side in the axial direction of the first shaft portion opposite from the side connected to the second shaft portion without any looseness.

7. The method for manufacturing the linear motion shaft for a steering device according to any of claims 4 to 6, wherein
in the process of forming the ball screw section, the ball screw section is formed in a predetermined range in the axial direction including the end portion in the axial direction of the first shaft portion on the side connected to the second shaft portion, and
in the process of forming the gripped section, the gripped section is formed by performing a shaving process to the end portion of the ball screw section on the side connected to the second shaft portion based on a portion separated in the axial direction from the end portion in the axial direction on the side connected to the second shaft portion.

8. The method for manufacturing the linear motion shaft for a steering device according to claim 7 which depends on claim 3, wherein
in the process of forming the gripped section, the gripped section is formed by performing a shaving process only to a radially outside portion of the end portion in the axial direction of the ball screw section on the side connected to the second shaft portion, and
in the friction welding, the first shaft portion is rotated in a direction of rotation in which a thread peak of the ball screw section appears to move in a direction approaching the second shaft portion when the ball screw section is viewed from an outside in a radial direction.

9. The method for manufacturing the linear motion shaft for a steering device according to any of claims 4 to 6, wherein
in the process of forming the ball screw section, the ball screw section is formed only in a portion of the first shaft portion which is separated in the axial direction from the end portion in the axial direction on the side connected to the second shaft portion, and
the process of forming the gripped section is composed of a process of performing a shaving process to an end portion in the axial direction of the first shaft portion on the side connected to the second shaft portion.

10. The method for manufacturing the linear motion shaft for a steering device according to any of claims 1 to 3, wherein the first input section is composed of a rack teeth portion.

11. The method for manufacturing a steering device,
the steering device including a linear motion shaft comprising a first input section having a first input section on an outer peripheral surface to which a driving force for making linear motion in an axial direction is input, a second shaft portion, and a joint between the first shaft portion and the second shaft portion,
wherein
the method comprises a process of manufacturing the linear motion shaft, and, in the process of manufacturing the linear motion shaft, the linear motion shaft is manufactured by the method for manufacturing the linear motion shaft for a steering device according to any of claims 1 to 10.

12. The linear motion shaft for a steering device, comprising: a first input section on an outer peripheral surface to which a driving force for making linear motion in an axial direction is input, a second shaft portion, a joint between the first shaft portion and the second shaft portion, and a gripped section for centering which is provided on an outer peripheral surface of an end portion in the axial direction on a joint side of the first shaft portion and is coaxial with a portion having the first input section.

13. The linear motion shaft for a steering device according to claim 12, wherein the first input section is composed of a ball screw section.

14. The linear motion shaft according to claim 13, wherein the first shaft portion has the ball screw section over an entire length in the axial direction of a portion separated in the axial direction from the gripped section.

15. The linear motion shaft according to claim 13, wherein the first shaft portion has the ball screw section over an entire length in the axial direction of the first shaft portion, and the gripped section is arranged on an outer peripheral surface of an end portion in the axial direction on the joint side of the ball screw section.

16. The linear motion shaft according to claim 14 or 15, wherein the ball screw section has an incompletely rolled portion at an end portion in the axial direction on a side far from the second shaft portion, and has a completely rolled portion in a portion adjacent to a side close to the second shaft portion with respect to the incompletely rolled portion.

17. The linear motion shaft according to claim 12, wherein the first input section is composed of a rack teeth portion.

18. A steering device comprising a linear motion shaft for a steering device,
the linear motion shaft comprising a first shaft portion having a first input section on an outer peripheral surface to which a driving force for making linear motion in an axial direction, a second shaft portion, and a linear motion shaft having a joint between the first shaft portion and the second shaft portion, and
the linear motion shaft composed of the linear motion shaft according to any one of claims 12 to 17.

19. The steering device according to claim 18, wherein only the completely rolled portion of the ball screw section engages with a plurality of balls.
